# EUROPEAN PATENT SPECIFICATION

(11) **EP 2 438 291 B1**
(45) Date of publication and mention of the grant of the patent: **03.04.2013**
(21) Application number: 10754400.9
(22) Date of filing: 27.05.2010
(51) Int. Cl.: F03B 9/00

(54) **DEVICE FOR OBTAINING ENERGY FROM WATER**
VORRICHTUNG ZUR ENERGIEGEWINNUNG AUS WASSER
DISPOSITIF POUR OBTENIR DE L'ÉNERGIE PAR L'EAU

(30) Priority: 02.06.2009 CZ 20090352
(43) Date of publication of application: 11.04.2012
(73) Proprietor: Paluka, Antonín, 27326 Neumerice (CZ)
(72) Inventor: Paluka, Antonín, 27326 Neumerice (CZ)
(74) Representative: Kratochvil, Vaclav
(86) International application number: PCT/CZ2010/000064
(87) International publication number: WO 2010/139287

(56) References cited:
- EP-A1- 1 980 745
- DE-A1- 2 152 637
- DE-C- 74 306
- FR-A- 474 846
- FR-A1- 2 534 636
- FR-A1- 2 689 184
- US-A- 5 684 335

## Description

### Technical field

The technical solution concerns a device for obtaining energy from water/comprising wheels interconnected with a pair of endless roller chains with carriers with buckets.

### State of the art

There are many devices for obtaining energy from water. On higher gradients it is possible to use all kinds of turbines. Their disadvantage is their usually higher acquisition price and the demands on water inlet arrangement. Miscellaneous water wheels are also known. Their disadvantage is their relatively low efficiency. Technical practice also employs devices based on the principle of bucket mechanism, but their disadvantage is a on-sided positioning of the buckets, which causes increased chain stress. Another disadvantage is the high acquisition price of cog wheels and the demands on their manufacture and maintenance

A typical prior art device which is considered to be the closest prior art can be seen in document EP-A-19800745.

### Essence of the technical solution

The disadvantages mentioned above are, to a large extent, eliminated by a device for obtaining energy from water, comprising wheels interconnected with a pair of endless roller chains with carriers with buckets, as shown in this technical solution. Its essence is that a bucket is always connected to two pins of one link of the roller chain; the leading edge of the bucket is located on the outer and inner side of the chain axis and the wheels are fitted with teeth whose head incorporates a recess for chain pins. An outlet for connecting an electric generator is connected to the axis of at least one wheel.

The wheels are advantageously shaped as polyhedrons, with the teeth located in the connecting points of the polyhedron edges. The plates of the roller chain have flat edges. The wheels are advantageously shaped as dodecahedrons with twelve teeth.

The axis between the chain wheels can be tilted at an angle of 0 to 90° relative to the base. Supporting pulleys are advantageously placed under the chain links.

The outer leading edges of the buckets advantageously protrude above their inner leading edges.

The electric generator is advantageously connected via a gearing mechanism.

The connection of one bucket always to two pins of one roller chain link guarantees its stability and increases the chain's strength. Since the leading edges of the bucket are located on the outer and inner side of the chain axis, the bucket can be bigger and the chain stress is therefor better distributed, without any deviations. Since the wheels have teeth whose heads incorporate recesses for chain pins, their manufacture is easier and the teeth can be connected to the wheel later.

If the wheel has the shape of a polyhedron, it can be manufactured more easily; this especially applies to wheels of larger dimensions. The flat walls facilitate a simpler movement of the buckets along the wheel. The teeth located in the connecting points of the polyhedron edges increase the strength of the wheels and their installation on the wheel is simple, with a high joint strength guaranteed. The plates of the roller chain made from flat steel with flat edges match the polyhedron shape, so that the space is fully utilized and sufficient strength is achieved. The mentioned solution makes it possible to use a small quantity of links, which also reduces the costs of production and maintenance.

The mentioned design allows to tilt the device at an angle of 0 to 90° relative to the base. If the device is positioned vertically, water supply is provided from the top tank; it is possible to provide water supply to multiple buckets at the same time. If the device is tilted, the device is placed in a shaft and water supply is provided to the buckets at the bottom. Chain guiding can be ensured using pulleys.

If the outer leading edges of the buckets protrude above their inner leading edges, the buckets are filled faster.

The electric generator can be connected via a gearing mechanism, which increases its possibilities of use.

### List of drawings

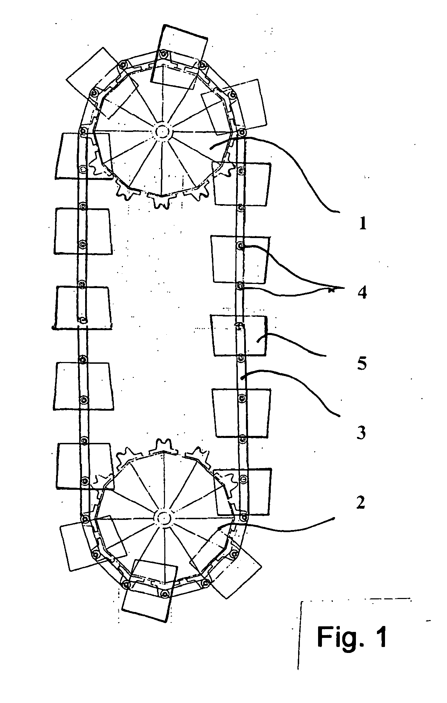

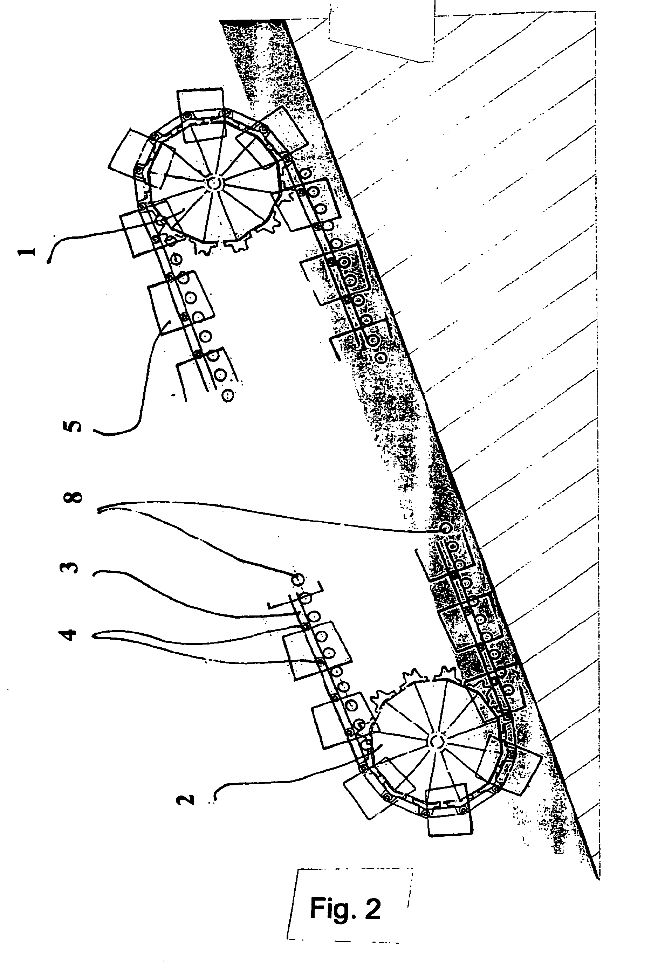

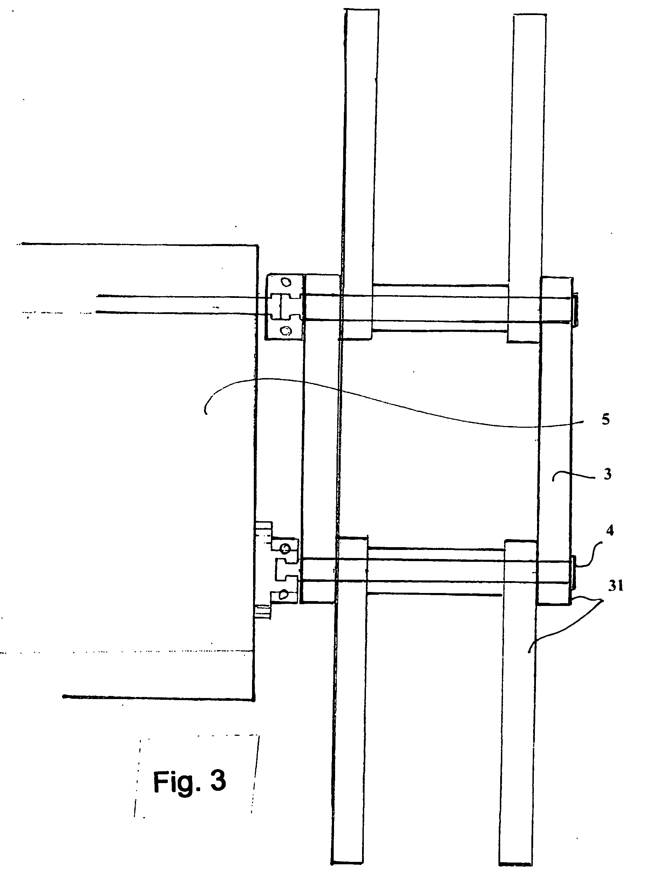

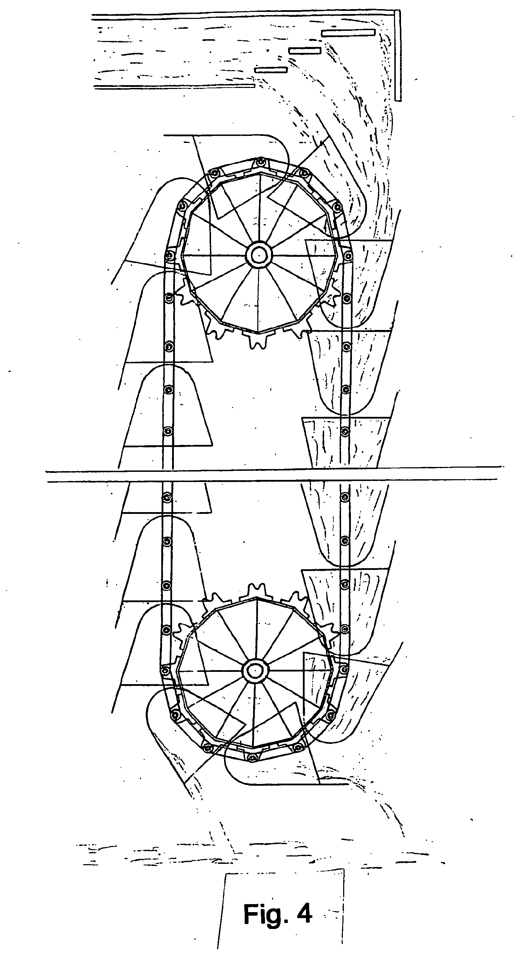

The technical solution will be described in greater detail on specific embodiments of the device for obtaining energy from water based on this technical solution, with the help of the attached drawings. Figure 1 shows a side view of the device placed vertically. Figure 2 shows a side view of the device tilted relative to the base. Figure 3 shows a detail view of the bucket mount. Figure 4 shows a side view of the bucket fill.

### Embodiments of the technical solution

The embodiment of a device for obtaining energy from water comprises a pair of driving wheels **1** on a single axis and a pair of driven wheels **2** on another axis. The driving wheels **1** and the driven wheels **2** are connected by a pair of endless roller chains **3** with carriers with buckets **5**. One bucket is always connected to two pins **4** of one link of the roller chain **3**; the leading edge of the bucket **5** is located on the outer and inner side of the axis of the chain **3**. The driving wheels **1** and the driven wheels **2** are shaped as dodecahedrons and are fitted with teeth **6** in the connecting points of the dodecahedron edges; the heads of the teeth incorporate recesses **7** for the pins **4** of the chain **3**. The plates **31** of the roller chain **3** are-made from flat steel and have flat edges **32**, matching the dodecahedron walls. The device is placed vertically. Water is supplied through a lead to a balancing and slud pit and, from there, to the upper part of the device. Using different supply lines, it is possible to fill at least two buckets **5** at the same time. The outer leading edges of the buckets **5** are fitted with an adaptor **9** for better filling. An outlet for connecting an electric generator is connected to the axis of the driven wheel **2** via a gearing mechanism.

In another embodiment, the axis between the driving wheels **1** and the driven wheels **2** of the chain **3** is titled at an angle of 30° to the base. The device is placed in a shaft and water supply is provided to the buckets **5**at the bottom. The wheel diameter is 6m, the width of the bucket **5** is 2m and the height of the water stream is 1m. Guide pulleys **8** are placed under the chain **3**.

In another embodiment of water power vertical ovals in water consumption 1m³/s during 5 r.p.m. and height difference of water level 60 m. Driving wheel diameter 10 m shaped 24 edges. Always to two pins of chain on both sides of driving wheel is connected one bucket with capacity bigger than 3 m³. Infilling 1 bucket of 1m³ water is consumption for one revolution 12 m³ water. Total water capacity in buckets on water oval is at least 20 m³ water and power on the circuit of driving wheel is more than 20 tonnes.

Yet another embodiment can involve the device placed on the surface of a water stream.

### Industrial use

The device for obtaining energy from water as per this technical solution can be used to obtain energy from water at small as well as big overflows.

## Claims

1. A device for obtaining energy from water, comprising wheels (1,2) connected by a pair of endless roller chains (3) with carriers with buckets (5) which are always connected to two pins (4) of one link of the roller chain (3) and the leading edge of the bucket (5) is located on the outer and inner side of the axis of the chain (3) and the wheels (1, 2) are fitted with teeth (6), and the device further comprising an outlet for connecting an electric generator which is connected to the axis of at least one wheel (1, 2), **characterised by** the fact that the wheels (1,2) are shaped as polyhedrons and the teeth (6) are placed in the connecting points of the polyhedron edges, with the plates (31) of the roller chain (3) having flat edges (32), and the heads of the teeth (6) incorporate recesses for the pins of the chain.

2. The device as in claim 1, **wherein** the wheels (1, 2) are shaped as dodecahedrons with twelve teeth (6).

3. The device as in any of the above claims, **wherein** the axis between the wheels (1, 2) of the chain (3) is titled at an angle of 0 to 90° relative to the base.

4. The device as in claim 3, **wherein** the pulleys (8) are placed under the links of the chain (3).

5. The device as in any of the above claims, **wherein** the outer leading edges of the buckets (5) protrude above the inner leading edges.

6. The device as in any of the above Claims, **wherein** an electric generator is connected via a gearing mechanism

## Patentansprüche

1. Vorrichtung für die Energiegewinnung aus Wasser, bestehend aus Rädern (1, 2), verbunden mit einem Paar unendlicher Rollenketten (3) mit Mitnehmern mit Bechern (5), welche jeweils zu zwei Bolzen (4) eines Elements der Rollenkette (3) angeschlossen sind, wobei die Eingangskanten des Bechers (5) an der Rußen-, sowie auch Innenseite der Kettenachse (3) situiert sind und die Räder (1, 2) mit Zähnen (6) versehen sind, und die Vorrichtung enthält weiter eine Ausgabe zu einem Stromgenerator, welcher an die Achse von mindestens einem Rad (1, 2) angeschlossen ist, **ausgeprägt dadurch**, dass die Räder (1, 2) die Form eines Polyeders haben und die Zähne (6) an den Stellen der Verbindungen der Polyederkanten situiert sind, wobei die Platten (31) der Rollenkette (3) gerade Kanten haben (32) und die Zahnköpfe (6) mit einer Aussparung (7) für die Bolzen (4) der Kette (3) versehen sind.

2. Vorrichtung nach Anspruch 1, **ausgeprägt dadurch**, dass die Räder (1, 2) in Form eines Dodekaeders mit zwölf Zähnen (6) sind.

3. Vorrichtung nach einem der vorigen Ansprüche, **ausgeprägt dadurch**, dass die Achse zwischen den Rädern (1, 2) der Kette (3) unter dem Winkel 0 bis 90° zur Basis geneigt ist.

4. Vorrichtung nach Anspruch 3, **ausgeprägt dadurch**, dass unter den Gliedern der Kette (3) Rollen situzert sind (8).

5. Vorrichtung nach einem der vorigen Ansprüche, **ausgeprägt dadurch**, dass die Außeneingabekanten der Becher (5) über die Inneneingabekanten vorragen.

6. Vorrichtung nach einem der vorigen Ansprüche, **ausgeprägt dadurch**, dass der Stromgenerator über ein Übersetzungsmechanismus angeschlossen ist.

## Revendications

1. L'équipement d'exploitation de l'énergie hydraulique, composé de roues (1, 2) accouplées d'un couple de chaînes à rouleaux sans fin (3) avec tocs à godets (5), qui sont raccordés toujours à deux axes (4) d'un maillon de la chaîne à rouleaux (3), les bords d'entrée du godet (5) se trouvant sur les faces extérieure et intérieure de l'axe de la chaîne (3) et les roues (1, 2) sont garnies de dents (6), et l'équipement contient aussi une sortie vers un générateur électrique qui est raccordé à la pièce de pivotement d'au moins une roue (1, 2), **caractérisé par le fait que** les roues (1, 2) ont la forme d'un polyèdre et les dents (6) sont assises aux joints des arêtes du polyèdre, les platines (31) de la chaîne à rouleaux (3) ayant les arêtes droites (32) et les têtes des dents (6) étant garnies de mortaises (7) pour les axes (4) de la chaîne (3).

2. L'équipement selon l'exigence 1, **caractérisé par le fait que** les roues (1, 2) ont la forme d'un dodécaèdre avec douze dents (6).

3. L'équipement selon n'importe quelle exigence précédente, **caractérisé par le fait que** l'axe entre les roues (1, 2) de la chaîne (3) est incliné de 0 à 90° vers la base.

4. L'équipement selon l'exigence 3, **caractérisé par le fait que** des galets (8) sont placés sous les maillons de la chaîne (3).

5. L'équipement selon n'importe quelle exigence précédente, **caractérisé par le fait que** les bords d'entrée extérieurs des godets (5) surmontent les bords d'entrée intérieurs.

6. L'équipement selon n'importe quelle exigence précédente, **caractérisé par le fait que** le générateur électrique est raccordé à travers un mécanisme de transmission.
